(19) **Europäisches Patentamt / European Patent Office / Office européen des brevets**

(11) **EP 4 237 301 B1**

(12) **FASCICULE DE BREVET EUROPEEN**

(45) Date de publication et mention de la délivrance du brevet:
**04.12.2024 Bulletin 2024/49**

(21) Numéro de dépôt: **21798046.5**

(22) Date de dépôt: **27.10.2021**

(51) Classification Internationale des Brevets (IPC):
**B60W 30/14** *(2006.01)* **B60W 50/00** *(2006.01)*

(52) Classification Coopérative des Brevets (CPC):
**B60W 30/14; B60W 50/0098;** B60W 2554/80;
B60W 2720/10; B60W 2720/103; B60W 2720/106

(86) Numéro de dépôt international:
**PCT/EP2021/079792**

(87) Numéro de publication internationale:
**WO 2022/090299 (05.05.2022 Gazette 2022/18)**

(54) **PROCÉDÉ DE DÉTERMINATION DE CONSIGNES D'ACCÉLÉRATION LONGITUDINALE**

VERFAHREN ZUR BESTIMMUNG VON LÄNGSBESCHLEUNIGUNGSSOLLWERTEN

METHOD FOR DETERMINING LONGITUDINAL ACCELERATION SETPOINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2020 FR 2011234**

(43) Date de publication de la demande:
**06.09.2023 Bulletin 2023/36**

(73) Titulaires:
• **Ampere SAS**
  **92100 Boulogne-Billancourt (FR)**
• **Université d'Orléans**
  **45100 Orléans (FR)**

(72) Inventeurs:
• **CLOAREC, Guy-Michel**
  **78114 MAGNY LES HAMEAUX (FR)**
• **COLIN, Guillaume**
  **45160 OLIVET (FR)**
• **OURABAH, Abdel-Djalil**
  **75013 PARIS (FR)**
• **SOLANO-ARAQUE, Edwin**
  **78280 GUYANCOURT (FR)**

(74) Mandataire: **Atout PI Laplace**
  **Immeuble Up On**
  **25 Boulevard Romain Rolland**
  **CS 40072**
  **75685 Paris Cedex 14 (FR)**

(56) Documents cités:
EP-A1- 1 170 652        EP-A2- 3 127 770
US-A1- 2012 277 965     US-A1- 2018 297 600
US-A1- 2019 202 462

EP 4 237 301 B1

**Description**

La présente invention concerne de manière générale l'agrément de conduite des véhicules automobiles.

Elle concerne, plus particulièrement, un procédé d'élaboration de consignes d'accélération longitudinale destinées à être utilisées pour commander des organes agissant sur l'accélération longitudinale d'un véhicule automobile hôte, tels que le moteur du véhicule, la boîte de vitesses, l'embrayage ou le système de freinage.

On cherche actuellement à développer des fonctions facilitant la conduite des véhicules automobiles, et notamment des fonctions de régulation de vitesse adaptative, comme décrit par exemple dans la demande US 2012/277965.

Ces fonctions de régulation de vitesse permettent d'adapter la vitesse du véhicule en fonction de l'environnement (limitation de vitesses, bouchons...) de façon autonome, c'est-à-dire sans intervention du conducteur, en agissant sur le moteur et/ou sur la boîte de vitesse et/ou sur le système de freinage.

Ces fonctions ont notamment pour objectif de rendre la conduite des véhicules plus sûre et plus agréable pour le conducteur et les passagers du véhicule.

Le caractère agréable et confortable de ces fonctions est également essentiel pour s'assurer que l'usager les utilise.

On connaît des documents "BELLEM, Hanna, SCHÖNENBERG, Thorben, KREMS, Josef F., et al. - Objective metrics of comfort: developing a driving style for highly automated vehicles. Transportation research part F: traffic psychology and behaviour, 2016, vol. 41, p. 45-54" et "BELLEM, Hanna, THIEL, Barbara, SCHRAUF, Michael, et al. - Comfort in automated driving: An analysis of préférences for different automated driving styles and their dependence on personality traits. Transportation research part F: traffic psychology and behaviour, 2018, vol. 55, p. 90-100" et "MÜLLER, Thomas, HAJEK, Hermann, RADIC-WEIßENFELD, Ljubica, 1 et al. Can you feel the différence? the just noticeable différence of longitudinal accélération. In : Proceedings of the Human Factors and Ergonomies Society Annual Meeting. Sage CA: Los Angeles, CA : SAGE Publications, 2013. p. 1219-1223" une relation entre système vestibulaire humain et agrément de conduite.

On rappellera ici que le système vestibulaire est celui qui permet de ressentir les mouvements appliqués au corps humain.

La demande de brevet US 2015/0224992 A1 divulgue un procédé d'adaptation en temps réel d'une stratégie de conduite à partir de la mesure d'un paramètre représentatif du comportement du véhicule (vitesse ou accélération). Lorsque la mesure vérifie un critère prédéterminé, par exemple, lorsque le mouvement du véhicule s'écarte de la stratégie de conduite, la stratégie de conduite est corrigée. La correction apportée dépend de poids attribués à certains critères comme celui de la consommation d'énergie.

Or, cette solution ne garantit pas l'agrément de conduite. Elle peut conduire à des fortes accélérations et décélérations particulièrement inconfortables pour le conducteur.

Un but de l'invention est de limiter au moins un des inconvénients précités.

A cet effet l'invention a pour objet un procédé de détermination de consignes d'accélération longitudinale lors d'une manoeuvre de changement de vitesse d'un véhicule automobile hôte, le procédé comprenant une étape d'exécution d'un profil d'accélération trapézoïdal lors de laquelle on détermine les consignes d'accélération longitudinale de sorte qu'elles suivent le profil d'accélération trapézoïdal, le profil d'accélération trapézoïdal comprenant les trois phases consécutives suivantes :

- une première phase d'accélération transitoire lors de laquelle la dérivée temporelle de l'accélération longitudinale est une première dérivée prédéterminée,

- une phase d'accélération stabilisée lors de laquelle l'accélération longitudinale est une accélération dite cible, non nulle et constante pendant une durée dite stabilisée,

- une deuxième phase d'accélération transitoire lors de laquelle la dérivée temporelle de l'accélération longitudinale est une deuxième dérivée prédéterminée, de signe opposé à celui de la première dérivée, et se terminant à une accélération longitudinale finale nulle,

dans lequel, le profil d'accélération trapézoïdal est initialisé à un profil d'accélération trapézoïdal initial comprenant une accélération cible initiale prédéterminée et une durée stabilisée initiale prédéterminée,

et dans lequel, lors de l'étape d'exécution du profil d'accélération trapézoïdal, on adapte le profil d'accélération trapézoïdal, en mettant à jour uniquement l'accélération cible et la durée stabilisée, en fonction d'un premier ensemble d'au moins un paramètre représentatif d'un comportement du véhicule hôte et d'un deuxième ensemble d'au moins un paramètre représentatif d'un comportement d'une cible.

Avantageusement, l'étape d'exécution du profil d'accélération trapézoïdal comprend une étape d'exécution de la première phase d'accélération transitoire pendant laquelle on détermine cycliquement des premières consignes d'accélération longitudinale de sorte qu'elles suivent la première phase d'accélération transitoire et pendant laquelle on met à jour cycliquement le profil d'accélération trapézoïdal en mettant à jour l'accélération cible en fonction d'une vitesse courante du véhicule hôte, d'une accélération longitudinale courante du véhicule hôte et d'une interdistance longitudinale courante entre le véhicule hôte et une cible.

Avantageusement, lors de la première phase d'accélération transitoire, on met à jour cycliquement le profil d'accélération trapézoïdal en mettant à jour l'accélération cible de façon que lorsque l'accélération longitudinale du véhicule hôte poursuit le dernier profil d'accélération mis à jour, il présente, à la fin de l'étape d'exécution du profil d'accélération trapézoïdal, une vitesse finale sensiblement égale à une vitesse cible courante et respecte une interdistance cible prédéterminée entre le véhicule hôte et la cible à la fin de l'étape d'exécution du profil d'accélération trapézoïdal.

Avantageusement, le procédé comprend une étape d'exécution de la phase d'accélération stabilisée pendant laquelle on détermine cycliquement des deuxièmes consignes d'accélération longitudinales de façon qu'elles suivent la phase d'accélération stabilisée et pendant laquelle on vérifie cycliquement si la vitesse courante du véhicule hôte est telle qu'en définissant les consignes d'accélération suivantes de sorte à suivre la deuxième phase d'accélération transitoire, jusqu'à ce que l'accélération du véhicule hôte soit sensiblement nulle, la vitesse finale du véhicule hôte est sensiblement égale à une vitesse cible courante.

Avantageusement, la vitesse cible courante est mesurée à partir d'un ensemble d'au moins un capteur d'environnement ou déterminée à partir d'au moins une mesure issue d'un ensemble d'au moins un capteur d'environnement.

Dans un mode de réalisation particulier, la valeur absolue de la première dérivée est égale à la valeur absolue de la deuxième dérivée.

Dans un mode de réalisation particulier, la cible est un véhicule situé devant le véhicule hôte.

L'invention se rapporte également à un produit programme d'ordinateur comprenant des instructions qui, lorsque le programme est exécuté par un ordinateur, conduisent celui-ci à mettre en oeuvre le procédé selon l'invention.

L'invention se rapporte aussi à un dispositif de commande d'un véhicule hôte configuré pour déterminer des consignes d'accélération longitudinale lors d'une manoeuvre de changement de vitesse d'un véhicule automobile hôte, le véhicule étant configuré pour exécuter un profil d'accélération trapézoïdal (PT) lors duquel les consignes d'accélération longitudinale sont déterminées de sorte qu'elles suivent un profil d'accélération trapézoïdal comprenant les trois phases consécutives suivantes :

- une première phase d'accélération transitoire lors de laquelle la dérivée temporelle de l'accélération longitudinale est une première dérivée prédéterminée,

- une phase d'accélération stabilisée lors de laquelle l'accélération longitudinale est une accélération dite cible, non nulle et constante pendant une durée dite stabilisée,

- une deuxième phase d'accélération transitoire lors de laquelle la dérivée temporelle de l'accélération longitudinale est une deuxième dérivée prédéterminée, de signe opposé à celui de la première dérivée, et se terminant à une accélération longitudinale finale nulle,

le dispositif de commande étant configuré pour adapter, lors de l'étape d'exécution du profil d'accélération trapézoïdal, le profil d'accélération trapézoïdal en mettant à jour uniquement l'accélération cible et la durée stabilisée, en fonction d'un premier ensemble d'au moins un paramètre représentatif d'un comportement du véhicule hôte et d'un deuxième ensemble d'au moins un paramètre représentatif d'un comportement d'une cible.

D'autres caractéristiques, détails et avantages de l'invention ressortiront à la lecture de la description faite en référence aux dessins annexés donnés à titre d'exemple et qui représentent, respectivement :

La figure 1 représente un profil d'accélération trapézoïdal,

La figure 2 est une représentation schématique en coupe du système vestibulaire humain,

La figure 3 est un ordinogramme de l'étape d'exécution du profil d'accélération trapézoïdal,

La figure 4 est une représentation d'un véhicule hôte comprenant un dispositif de commande selon l'invention.

D'une figure à l'autre, les mêmes éléments sont repérés par les mêmes références.
L'invention se rapporte à un procédé de détermination de consignes d'accélération longitudinale destinée à être utilisées pour commander des organes agissant sur l'accélération longitudinale d'un véhicule automobile, dit véhicule hôte, pendant une manoeuvre de changement de vitesse du véhicule hôte, de façon que les consignes d'accélération longitudinale successives suivent un profil d'accélération longitudinale prédéterminé.

L'invention se rapporte également à un procédé de commande d'un véhicule automobile dans lequel les consignes d'accélération longitudinale déterminées par le procédé selon l'invention sont utilisées par le dispositif de commande pour commander des organes de commande du véhicule hôte de façon que l'accélération du véhicule hôte suive sensiblement le profil d'accélération longitudinale.

Il est à noter que, dans la présente demande de brevet, on s'intéresse uniquement à la vitesse longitudinale, à l'accélération longitudinale, à la dérivée temporelle de l'accélération longitudinale, aussi appelée à-coup dans la suite du texte. Par conséquent, dans la suite de la présente demande de brevet, par vitesse, on entend vitesse longitudinale, par accélération, on entend l'accélération longitudinale, et par dérivée de l'accélération ou à-coup, la dérivée temporelle de l'accélération longitudinale.

Une « manoeuvre » de changement de vitesse est définie comme un changement de vitesse du véhicule hôte lors duquel le véhicule hôte passe d'un premier état dans lequel le véhicule hôte présente une vitesse initiale à un deuxième état dans lequel le véhicule hôte présente une vitesse finale différente de la vitesse initiale et une accélération nulle.

Ce type de manoeuvre peut intervenir en cas de transition entre deux vitesses réglementaires au passage d'un panneau de limite de vitesse, en cas de variation de pente à vitesse constante, ou en cas de freinage dû au fait que le véhicule hôte rattrape un véhicule plus lent après une phase de roulage à vitesse constante, ou en cas de freinage dû à l'arrivée devant un feu rouge.

Ce type de manoeuvre peut impliquer un changement de régime et/ou du couple du moteur.

Lors du procédé de génération de consignes d'accélération longitudinale selon l'invention, les consignes d'accélération longitudinale sont définies de façon à suivre un profil d'accélération dit trapézoïdal défini ci-après.

En effet, on a pu observer que lors de ce type de manoeuvres, les conducteurs mettent habituellement en oeuvre un profil d'accélération trapézoïdal constitué de trois phases consécutives.

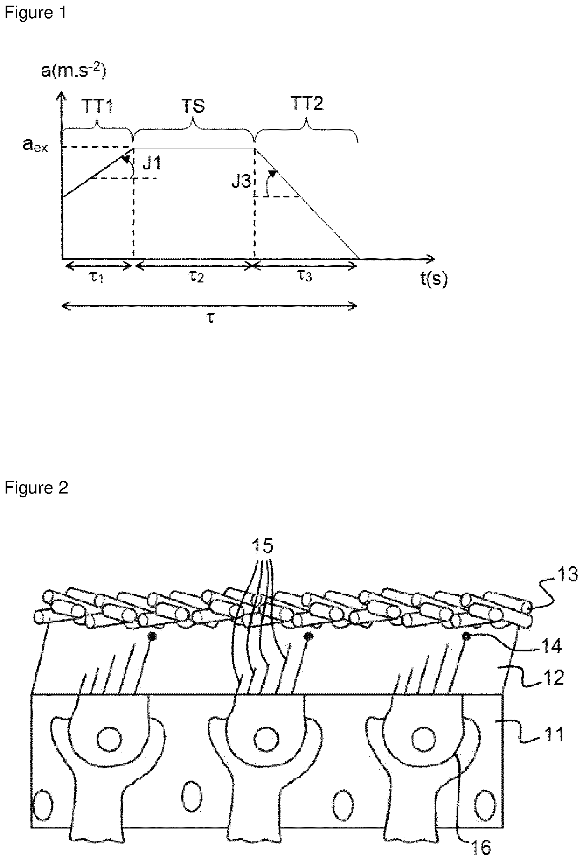

Sur la figure 1, on a représenté un exemple d'un tel profil d'accélération trapézoïdal représentant une accélération longitudinale en fonction du temps.

Le profil d'accélération trapézoïdal est constitué des trois phases consécutives suivantes :

- une première phase d'accélération transitoire TT1 lors de laquelle la dérivée temporelle de l'accélération est constante et égale à une première dérivée prédéterminée J1,

- une phase d'accélération stabilisée TS durant une durée $\tau_2$ non nulle et lors de laquelle l'accélération est constante est égale à une accélération cible $a_{ex}$,

- une deuxième phase d'accélération transitoire TT2, lors de laquelle la dérivée temporelle de l'accélération est constante et égale à une deuxième dérivée J3 prédéterminée et de signe opposé à celui de la première dérivée J1, la deuxième phase transitoire se terminant à une accélération finale nulle.

Le profil est entièrement défini par les contraintes suivantes : la première dérivée prédéterminée J1, la durée $\tau_2$, l'accélération cible $a_{ex}$ et la deuxième dérivée J3 prédéterminée et de signe opposé à celui de la première dérivée J1, la deuxième phase transitoire se terminant à une accélération finale nulle.

Comme les trois phases sont consécutives, la durée $\tau$ du profil d'accélération trapézoïdal est égale à la somme des durées des trois phases d'accélération c'est-à-dire de la première durée $\tau_1$ de la première phase d'accélération transitoire TT1, de la deuxième durée $\tau_2$ de la phase d'accélération stabilisée TS et de la troisième durée $\tau3$ de la deuxième phase d'accélération transitoire TT2.

Il est à noter que l'accélération peut être positive ou négative. Dans le cas où l'accélération est négative, il s'agit d'une décélération.

Dans l'exemple de la figure 1, le premier à-coup J1 est positif, l'accélération cible $a_{ex}$ est positive et le deuxième à-coup J3 est négatif mais le profil d'accélération trapézoïdal pourrait, en variante, être tel que le premier à-coup J1 soit négatif, $a_{ex}$ négative et que le deuxième à-coup J3 soit positif.

On peut décrire brièvement l'anatomie du système vestibulaire humain, en relation avec la figure 2. Le système vestibulaire est l'organe sensoriel qui détecte les sensations liées à l'équilibre. Il informe notamment le système nerveux central sur la position et les déplacements de la tête. Il est constitué de deux sous-systèmes principaux, à savoir les canaux semi-circulaires qui sont associés aux rotations, et les organes otolithiques qui sont associés aux mouvements de translation.

Les organes otolitiques, qui nous intéressent plus particulièrement ici, sont constitués par une pièce de forme sensiblement elliptique, nommée macula 11, laquelle est recouverte par une membrane gélatineuse qui se nomme membrane otolithique 12. Cette membrane otolithique 12 est elle-même recouverte d'une couche 13 de particules de carbonate de calcium appelées otolithes.

Des cellules sensorielles 16, qui sont situés dans la macula 11, portent des cils noyés dans la membrane otolithique 12. Elles portent chacune, à une extrémité, un cil principal appelé kinocil 14, et d'autres cils appelés stéréocils 15.

Lorsque le corps humain subit une accélération dans l'axe de sensibilité d'une cellule sensorielle 16 (c'est-à-dire selon un axe sensiblement orthogonal à l'axe des cils), la couche 13 d'otolithes, qui présente une inertie relativement conséquente, a tendance à rester sur place alors que la base de la macula 11 se déplace avec le reste du corps humain.

Ce faisant, la membrane otolithique 12 se déforme, ce qui produit une inclinaison des cils 14, 15. Cette inclinaison est traduite par les cellules sensorielles 16 sous forme de signaux électriques envoyés vers le système nerveux central, ce qui permet au cerveau d'interpréter une accélération.

Le signal varie selon que les stéréocils 15 s'inclinent vers le kinocil 14 ou à l'opposé de ce dernier, ce qui permet de distinguer entre des accélérations positives et négatives.

On comprend alors que la vitesse du véhicule n'est pas (ou peu) responsable de la réponse sensorielle du système vestibulaire. Toutefois, du fait que le conducteur reçoit aussi des stimuli visuels et auditifs lui permettant de détecter sa vitesse, celle-ci a une influence sur la perception du conducteur et sur le fait que le conducteur ressente une manoeuvre comme agréable ou non.

Enfin, on peut diviser les organes otolithiques du système vestibulaire en deux composantes, ici appelées « système vestibulaire soutenu » et « système vestibulaire transitoire ». Ces deux systèmes ont des sensibilités différentes à différents stimuli.

Pour simplifier, on peut considérer que le système vestibulaire soutenu perçoit les composantes de basse fréquence de l'accélération, alors que le système vestibulaire transitoire est plus sensible aux hautes fréquences ainsi qu'aux phases d'accélération transitoire.

Au cours des phases d'accélération transitoires TT1 et TT2, c'est le système vestibulaire transitoire qui est le plus sensible aux sensations d'à-coup.

La présente invention propose de tenir compte de la structure de ce système vestibulaire pour générer les consignes d'accélération de sorte à commander un véhicule automobile 20 de façon physiologiquement confortable pour les passagers et le conducteur tout en suivant la façon classique de conduire des conducteurs lors de manoeuvres de changements de vitesse en prévoyant un profil d'accélération trapézoïdal tel que représenté en figure 1.

A cet effet, l'invention se rapporte à un procédé de détermination de consignes d'accélération longitudinale comprenant une étape d'exécution d'un profil trapézoïdal lors duquel les consignes d'accélération sont définies de façon à suivre un profil d'accélération trapézoïdal dont un exemple est représenté en figure 1.

Le profil d'accélération est initialisé à un profil d'accélération trapézoïdal initial défini par une accélération cible initiale $a_{exi}$, une durée initiale de la phase d'accélération stabilisée $\tau_{2i}$, la première dérivée de l'accélération ou premier à-coup J1 et la deuxième dérivée de l'accélération ou deuxième à-coup J3.

Pour qu'une manoeuvre soit considérée comme acceptable du point de vue du confort physiologique du conducteur, la valeur absolue du premier à-coup J1 est avantageusement définie de façon à être inférieure ou égale à un premier seuil $\left| \widehat{J_1} \right|$, dont la valeur peut être retrouvée de manière empirique à l'aide de tests réalisés sur un panel représentatif d'individus et la valeur absolue du deuxième à-coup J3 est avantageusement définie de façon à être inférieure ou égale à un deuxième seuil $\left| \widehat{J_3} \right|$, dont la valeur peut être retrouvée de manière empirique à l'aide de tests réalisés sur un panel représentatif d'individus.

Avantageusement, l'accélération cible initiale $a_{exi}$ est définie de façon à être inférieure ou égale à un seuil prédéterminé dont la valeur peut être retrouvée de manière empirique à l'aide de tests réalisés sur un panel représentatif d'individus de façon à limiter la sollicitation du système vestibulaire soutenu.

Avantageusement, la durée stabilisée initiale $\tau_{2i}$ est définie de façon à être inférieure ou égale à un seuil prédéterminé dont la valeur peut être retrouvée de manière empirique à l'aide de tests réalisés sur un panel représentatif d'individus de façon à limiter la sollicitation du système vestibulaire soutenu.

On définit une interdistance cible $\Delta X^{sp}$. L'interdistance finale, c'est-à-dire l'interdistance à la fin du profil d'accélération initial, entre le véhicule hôte et une cible est égale à l'interdistance cible $\Delta X^{sp}$.

L'interdistance cible $\Delta X^{sp}$ est avantageusement définie, préalablement à l'étape d'exécution du profil d'accélération trapézoödal, de façon à respecter une contrainte sécuritaire et éventuellement, en fonction d'au moins un paramètre représentatif du comportement du conducteur du véhicule hôte.

L'interdistance avec une cible correspond à une distance séparant le véhicule hôte et la cible. Cette interdistance est positive si le véhicule hôte se situé derrière la cible selon l'axe longitudinal du véhicule hôte dans le sens de déplacement du véhicule hôte et négative si le véhicule hôte est situé devant la cible selon l'axe longitudinal du véhicule hôte dans le sens de déplacement du véhicule hôte.

La cible peut être mobile ou fixe par rapport au référentiel terrestre.

Par exemple, dans le cas de l'arrivée du véhicule hôte devant un feu rouge, la vitesse finale est nulle et la cible est le feu. La cible est fixe. L'interdistance est une distance entre la position finale du véhicule et le feu selon l'axe longitudinal du véhicule hôte dans le sens de déplacement du véhicule hôte.

Dans le cas du rattrapage un véhicule situé devant le véhicule hôte plus lent après une phase de roulage à vitesse constante, la cible est le véhicule situé devant le véhicule hôte et la vitesse finale est la vitesse du véhicule situé devant le véhicule hôte et. La cible est mobile.

Le profil trapézoïdal initial est avantageusement défini, à partir d'une vitesse initiale du véhicule hôte $V_0^h$ , de façon que le véhicule hôte, commandé par les consignes d'accélération déterminées de façon à suivre le profil d'accélération initial, présente une vitesse finale $V_f^h$ qui est une vitesse cible initiale $V_f^{ti}$ .

On définit la vitesse finale du véhicule hôte $V_f^h$ comme la vitesse du véhicule hôte à la fin de l'étape d'exécution du profil d'accélération trapézoïdal.

La vitesse cible initiale $V_f^{ti}$ est avantageusement déterminée en fonction d'une vitesse initiale associée à une cible, par exemple, une vitesse de la cible lorsque la cible est un véhicule situé devant le véhicule hôte ou une vitesse limite lorsque la cible est un panneau de limitation de vitesse.

La vitesse cible initiale $V_f^{ti}$ peut être fixée à la vitesse initiale du véhicule hôte ou déterminée à partir d'un modèle prédictif prenant en compte le comportement du véhicule hôte.

Un changement de comportement de la cible, par exemple, un changement de vitesse d'un véhicule cible et/ou de celui du véhicule hôte, par exemple du fait de la configuration du terrain, peuvent conduire le véhicule hôte commandé par des consignes d'accélération générées en suivant le profil d'accélération initial à s'écarter de l'objectif de vitesse cible initiale $V_f^{ti}$ et/ou de celui d'interdistance finale $\Delta X^{sp}$.

Afin d'adapter les consignes d'accélération à de tels écarts, le profil d'accélération trapézoïdal selon l'invention est adapté pendant l'étape d'exécution du profil trapézoïdal, en fonction de paramètres représentatifs du comportement réel du véhicule hôte et de celui de la cible.

Selon l'invention, seules l'accélération cible $a_{ex}$ et la durée de la phase stabilisée $\tau_2$ sont réglables, c'est-à-dire adaptables. Les autres contraintes définissant le profil trapézoïdal, à savoir le premier à-coup J1, le deuxième à-coup J3 et l'accélération finale nulle ne sont pas réglables.

Ainsi, lors du procédé selon l'invention, on adapte le profil d'accélération trapézoïdal en réglant ou en mettant à jour uniquement l'accélération cible et la durée de la phase stabilisée $\tau_2$ parmi les contraintes définissant le profil d'accélération trapézoïdal.

Par conséquent, l'adaptation du profil trapézoïdal est réalisée sans modifier le premier à-coup J1 ni le deuxième à-coup J3. Par ailleurs, les consignes d'accélération étant définies pour suivre le profil d'accélération trapézoïdal, cela permet d'adapter les consignes d'accélération au comportement réel du véhicule hôte et de la cible tout en conservant le caractère physiologiquement agréable de la manoeuvre pour le conducteur dès lors que les à-coups J1 et J3 ont été déterminés à de façon à respecter ce caractère physiologiquement agréable. Le maintien des valeurs prédéfinies d'à-coup pendant les phases transitoires permet d'éviter des ralentissements et accélérations trop brusques lors de la manoeuvre. Cela permet de limiter la perception, par le conducteur, de la modification du profil lors de la manoeuvre de garantir un certain agrément de conduite.

Avantageusement, lors du procédé selon l'invention, on adapte le profil d'accélération trapézoïdal à partir de vitesses courantes du véhicule hôte et de vitesses cibles courantes à différents cycles de mise à jour du profil d'accélération.

La vitesse courante du véhicule hôte est une mesure de la vitesse du véhicule hôte au moment de la mise à jour du profil. Cette mesure est avantageusement mesurée par un ensemble d'au moins un capteur dit interne du véhicule hôte ou déterminée à partir d'une ou plusieurs mesures provenant d'un ensemble d'au moins un capteur interne du véhicule hôte.

L'ensemble d'au moins un capteur interne comprend par exemple un capteur de vitesse et/ou un capteur d'accélération.

La vitesse cible courante $V_f^t$ du véhicule hôte à un instant courant est une estimation, à l'instant courant, de la vitesse que le véhicule hôte doit rejoindre en suivant le profil d'accélération.

La vitesse cible courante est avantageusement mesurée par un ensemble d'au moins un capteur d'environnement du véhicule hôte ou déterminée à partir d'une mesure issue d'un ensemble d'au moins un capteur d'environnement du véhicule hôte.

L'ensemble d'au moins un capteur d'environnement du véhicule hôte comprend, par exemple, une caméra et/ou un radar et/ou un lidar, permettant de mesurer la vitesse courante de la cible lorsque la cible est un véhicule cible circulant devant le véhicule hôte. Cette vitesse cible peut varier si la vitesse du véhicule cible varie.

La vitesse cible courante peut être la vitesse courante du véhicule hôte si on suppose que le véhicule hôte avance à vitesse fixe ou une estimée de la vitesse cible courante calculée, notamment, à partir de la vitesse courante du véhicule hôte.

En variante, la vitesse cible courante est déterminée par un modèle prédictif prédisant la volonté du conducteur en fonction des conditions de roulage, à partir de la vitesse courante du véhicule cible.

En variante, dans le cas d'un feu de circulation, la vitesse cible courante est nulle lorsque le feu est rouge et non nulle et prédéterminée lorsque le feu est vert. Cette vitesse courante peut être obtenue à partir d'un capteur d'environnement du véhicule hôte, par exemple une antenne de communication, permettant d'obtenir des informations sur un état d'un feu.

Dans le cas d'un panneau de vitesse réglementaire, la vitesse courante peut être obtenue à partir d'un capteur d'environnement du véhicule hôte, par exemple une antenne de communication, permettant d'obtenir des informations sur une position et une valeur de la vitesse réglementaire d'un panneau de circulation.

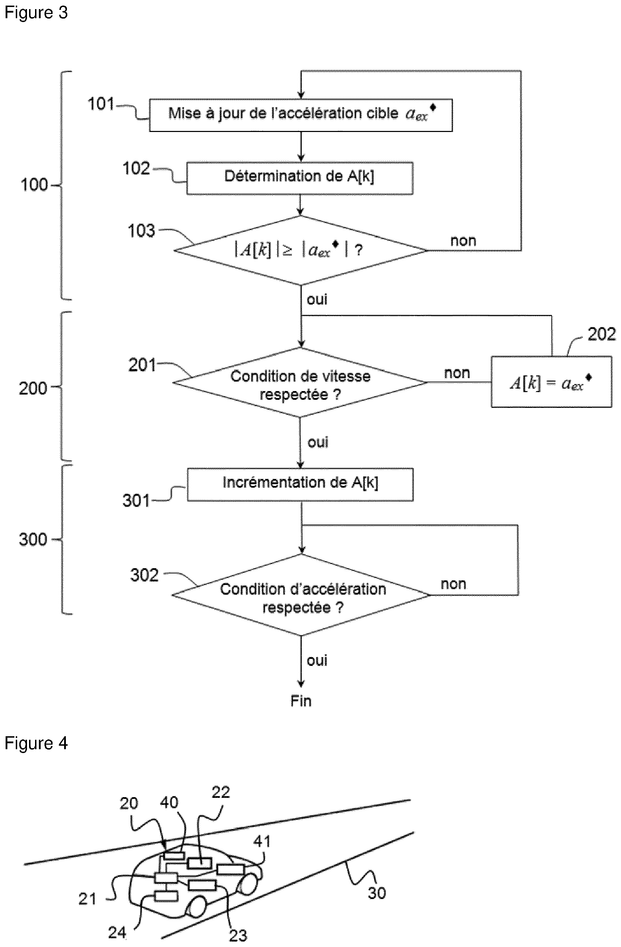

Sur la figure 3, on a représenté un ordinogramme des étapes mises en oeuvre lors de l'étape d'exécution du profil d'accélération, lors de laquelle les consignes d'accélération successives sont définies de façon à suivre le profil d'accélération trapézoïdal. Autrement dit, les consignes d'accélération $A[k]$ sont définies de façon que la suite de consignes d'accélération définie respecte les contraintes définies par le profil d'accélération à savoir successivement $J1$, $a_{ex}$ et $\tau_2$ puis $J3$.

Comme visible en figure 3, l'étape d'exécution du profil comprend une première phase d'exécution 100 de la phase d'accélération transitoire TT1 lors de laquelle on met à jour cycliquement l'accélération cible, lors d'étapes 101, en fonction d'au moins un paramètre représentatif du comportement courant du véhicule hôte et d'au moins un paramètre représentatif du comportement courant de la cible.

Cela revient à mettre à jour le profil d'accélération trapézoïdal en mettant à jour uniquement l'accélération cible $a_{ex}$, et par voie de conséquence, la durée stabilisée $\tau_2$, parmi les contraintes définissant le profil trapézoïdal.

Ainsi, chaque cycle de mise à jour du profil d'accélération trapézoïdal agit sur la hauteur du plateau d'accélération TS constituant la phase d'accélération stabilisée et, par voie de conséquence sur $\tau_2$. Les autres contraintes définies par le profil d'accélération, à savoir $J1$ et $J3$ sont inchangées.

A chaque cycle k de mise à jour de l'accélération cible, l'accélération cible mise à jour $a_{ex}$♦ est déterminée, lors de l'étape 101, de façon que la vitesse finale du véhicule hôte $V_f^h$ soit la vitesse cible courante Vf et de façon que l'interdistance finale soit l'interdistance cible $\Delta X^{sp}$, lorsque les consignes d'accélération sont définies de façon à poursuivre le dernier profil d'accélération trapézoïdal mis à jour.

L'accélération cible mise à jour $a_{ex}$♦ est avantageusement déterminée à partir de la vitesse courante du véhicule hôte $V_0^h$, d'une accélération longitudinale courante du véhicule hôte $a_0$, d'une interdistance courante entre le véhicule hôte et une cible $\Delta X^0$, de la vitesse cible courante $V_f^t$ et de l'interdistance cible $\Delta X^{sp}$, comme nous le verrons plus précisément par la suite.

L'interdistance courante $\Delta X^0$ est, par exemple, déterminée à partir d'une mesure issue d'un ensemble d'au moins un capteur d'environnement, comprenant par exemple, une caméra et/ou un radar et/ou un lidar ou mesuré à partir de cet ensemble d'au moins un capteur d'environnement.

Lors de la phase d'exécution 100 de la première phase d'accélération transitoire TT1, on définit également lors d'étape 102, les consignes accélération $A[k]$ de façon que les consignes d'accélération successives suivent la première phase d'accélération transitoire, c'est-à-dire de façon qu'elles respectent la contrainte d'à-coup constant et égal à $J1$.

Pendant la phase 100 d'exécution de la première phase d'accélération transitoire TT1, la consigne de l'accélération $A[k]$ est déterminée cycliquement jusqu'à ce que la valeur absolue de l'accélération courante du véhicule hôte $a_0$ soit supérieure ou égale à la valeur absolue de l'accélération cible $a_{ex}$♦ définie lors la dernière mise à jour du profil d'accélération.

Le procédé comprend donc, par exemple, à chaque cycle de mise à jour k, une étape 102 d'incrémentation de la valeur de la consigne d'accélération $A[k]$ selon l'équation suivante :

$$A[k] = A[k-1] + \Delta t * J_1$$

où Δt est l'intervalle de temps entre deux cycles de mise à jour successifs et A[0] est l'accélération initiale du véhicule hôte.

L'accélération initiale A[0] est avantageusement mesurée ou déterminée à partir d'au moins une mesure obtenue par un ensemble d'au moins un capteur interne du véhicule hôte.

Chaque cycle de mise à jour comprend en outre une étape 103 de comparaison de la valeur absolue de la consigne d'accélération A[k] avec la valeur absolue de l'accélération cible $a_{ex}$♦ définie lors la dernière mise à jour du profil d'accélération, c'est-à-dire au cycle k.

Tant que la valeur absolue de la consigne d'accélération A[k] est inférieure à la valeur absolue de l'accélération cible $a_{ex}$♦, on passe au prochain cycle de mise à jour k+1 et lorsque la consigne d'accélération A[k] est supérieure ou égale à la valeur absolue de l'accélération cible $a_{ex}$♦, une phase 200 d'exécution de la phase d'accélération stabilisée TS débute.

Nous allons maintenant décrire plus précisément les cycles de mise à jour de l'accélération cible.

A chaque cycle k de mise à jour de l'accélération cible, l'accélération cible mise à jour $a_{ex}$♦, est déterminée de façon que la vitesse finale du véhicule hôte $V_f^h$ soit la vitesse cible courante Vf et de façon que l'interdistance finale entre le véhicule hôte et la cible soit l'interdistance cible $\Delta X^{sp}$, lorsque les consignes d'accélération sont définies de façon à poursuivre le dernier profil d'accélération trapézoïdal mis à jour.

La contrainte sur la vitesse finale du véhicule hôte $V_f^h$ devant être égale à la vitesse cible courante Vf peut être exprimée comme suit :

$$\tau_2 = \alpha_1 * \frac{1}{a_{ex}} + \alpha_2 * a_{ex}$$

Avec :

$$\alpha_1 = \Delta V^h + \frac{a_0^2}{2 * J_1}$$

$$\alpha_2 = -\frac{1}{2}\left(\frac{J_1 + J_3}{J_1 * J_3}\right)$$

Où

$$\Delta V^h = V_f^h - V_0^h$$

Où $a_0$ est l'accélération courante du véhicule hôte.

La contrainte d'interdistance impose que l'interdistance finale soit l'interdistance cible $\Delta X^{sp}$. Elle peut se traduire, en faisant une approximation polynomiale par :

$$\Delta X^{sp} = \left[V_f^t * (\tau_1 + \tau_2 + \tau_3) + X_0^t\right]$$
$$- \left[x_0^h + \beta_0 + \beta_1 * a_{ex} + \beta_2 * \tau_2 + \beta_3 * a_{ex} * \tau_2^2 + \beta_4 * a_{ex}^2 * \tau_2 + \beta_5 * a_{ex}^3\right]$$

Où $V_f^t(\tau_1 + \tau_2 + \tau_3)$ est une estimée de la vitesse finale de la cible,

Où Vf est une estimée de la vitesse finale de la cible, c'est-à-dire à l'instant $\tau = \tau_1 + \tau_2 + \tau_3$ $X_0^t$ est la position courante de la cible le long de l'axe longitudinal, $x_0^h$ est la position courante du véhicule hôte le long de l'axe longitudinal, et où la position finale du véhicule hôte est définie à partir de la position courante $x_0^h$ et en intégrant deux fois le profil d'accélération jusqu'à la fin du profil avec :

$$\beta_0 = \frac{a_0{}^3}{3 * J_1^2} - \frac{v_0 * a_0}{J_1}$$

$$\beta_1 = \left(V_0^h - \frac{a_0{}^2}{2 * J_1}\right)\left(\frac{J_1 + J_3}{J_1 * J_3}\right)$$

où $V_0^h$ est la vitesse courante du véhicule hôte :

$$\beta_2 = \left(V_0^h - \frac{a_0{}^2}{2 * J_1}\right)$$

$$\beta_3 = \frac{1}{2}$$

$$\beta_4 = \left(\frac{2 * J_1 + J_3}{2 * J_{1*} J_3}\right)$$

$$\beta_5 = \left(\frac{(J_1 + J_3)^2 + J_1 * (J_1 + J_3)}{6 * J_1{}^2 * J_3{}^2}\right)$$

En combinant les deux conditions, on retrouve la condition polynomiale suivante :

$$0 = \delta_0 + \delta_1 * a_{ex} + \delta_2 * a_{ex}{}^2 + \delta_4 * a_{ex}{}^4$$

En supposant que la cible présente une vitesse constante, alors $V_f^t = V_0^t$ , les coefficients d'ordre i , $\delta_i$ du polynôme peuvent être exprimés en fonction de paramètres connus ou mesurables :

$$\delta_0 = \left(V_f^t - V_f^h\right) * \left[\Delta V^h + \frac{a_0{}^2}{2 * J_1}\right] + \frac{1}{2} * \left[\Delta V^h + \frac{a_0{}^2}{2 * J_1}\right]^2$$

$$\delta_1 = \Delta X^0 - \Delta X^{sp} - a_0 * \left[\frac{1}{3} * \left(\frac{a_0}{J_1}\right)^2 - \frac{V_0^h - V_0^t}{J_1}\right]$$

$$\delta_2 = \frac{1}{2} * \left[\frac{1}{J_1} * \left(V_f^t - V_0^h + \frac{a_0{}^2}{2 * J_1}\right) + \frac{1}{J_3} * \left(V_f^t - V_f^h\right)\right]$$

$$\delta_4 = \frac{1}{24} * \left[\frac{J_1{}^2 - J_3{}^2}{J_1{}^2 * J_3{}^2}\right]$$

Où $\Delta X^0 = X_0^t - x_0^h$ est l'interdistance courante.

L'accélération courante du véhicule hôte $a_0$ est avantageusement mesurée ou déterminée à partir d'au moins une mesure obtenue par un ensemble d'au moins un capteur interne du véhicule hôte.

En supposant que la vitesse finale du véhicule hôte $V_f^h$ est la vitesse finale de la cible étant $V_0^t$ , alors $\delta_0$ et

$\delta_2$ deviennent :

$$\delta_0 = \frac{1}{2} * \left[ \Delta V^h + \frac{a_0{}^2}{2 * J_1} \right]^2$$

$$\delta_2 = \frac{1}{2 * J_1} \left( V_f^t - V_0^h + \frac{a_0{}^2}{2 * J_1} \right)$$

Ainsi, l'accélération cible mise à jour $a_{ex}\blacklozenge$ peut être calculée en trouvant les zéros d'un polynôme d'ordre 4. Cela peut être fait en utilisant l'algorithme de Newton.

En variante, la résolution peut être simplifiée en introduisant la condition de la symétrie du profil trapézoïdal, c'est-à-dire imposant $J_1 = J_3$ ce qui semble être plus agréable physiologiquement pour des conducteurs, selon l'article de BELLEM, Hanna, THIEL, Barbara, SCHRAUF, Michael, et al. - Comfort in automated driving: "An analysis of preferences for different automated driving styles and their dependence on personality traits." Transportation research part F: traffic psychology and behaviour, 2018, vol. 55, p. 90-100".

Cette condition conduit à annuler le terme $\delta_4$. Cela permet d'obtenir un polynôme de deuxième ordre pour lequel la solution qui respecte toutes les contraintes est l'accélération cible mise à jour $a_{ex}\blacklozenge$.

L'accélération cible mise à jour $a_{ex}\blacklozenge$ est donnée par :

$$a_{ex}\blacklozenge = \frac{-\delta_1 \pm \sqrt{\delta_1{}^2 - 4 * \delta_0 * \delta_2}}{2 * \delta_2}$$

Ainsi, dans le cas d'une accélération du véhicule cible situé devant le véhicule hôte et que le véhicule hôte cherche à rejoindre et à suivre à une distance correspondant à l'interdistance cible, la hauteur du plateau du profil trapézoïdal est augmentée. Comme l'à-coup est inchangé lors de la phase d'exécution de la première phase d'accélération transitoire, le conducteur ne perçoit que très peu le changement de stratégie d'accélération.

Le procédé comprend ensuite une phase 200 d'exécution de la phase d'accélération stabilisée, consécutive à l'étape 100 d'exécution de la première phase d'accélération transitoire, et lors de laquelle les consignes d'accélération sont définies de façon à suivre la phase d'accélération stabilisée, c'est-à-dire à respecter la dernière accélération cible définie lors de la première phase d'accélération transitoire, c'est-à-dire l'accélération cible $a_{ex}\blacklozenge$.

Il est à noter que l'accélération cible est réglable uniquement lors de l'étape 100 d'exécution de la première phase d'accélération transitoire. Elle n'est plus modifiable pendant l'étape 200 d'exécution de la phase d'accélération stabilisée de façon que le profil d'accélération du véhicule hôte comprenne un plateau d'accélération à l'accélération cible.

Lors de l'étape 200 d'exécution de la phase d'accélération stabilisée, la consigne d'accélération est définie, lors d'étapes 202, mises en oeuvre de façon cyclique de sorte à être constante et égale à l'accélération cible $a_{ex}\blacklozenge$ effectuée pendant l'étape 100 d'exécution de la phase d'accélération stabilisée.

Autrement dit, lors de l'étape 200 d'exécution de la phase d'accélération stabilisée, la valeur de la consigne d'accélération est maintenue à la dernière valeur de l'accélération cible $a_{ex}\blacklozenge$, calculée lors de la phase d'accélération transitoire :

$$A_{veh}^{sp}[k] = a_{ex}\blacklozenge$$

Lors de cette étape 200, il ne reste qu'un degré de liberté pour adapter le profil d'accélération du véhicule hôte tout en garantissant que la vitesse finale du véhicule hôte est la vitesse cible à l'instant courant. Ce degré de liberté est la durée $\tau2$.

Autrement dit, le dernier degré de liberté est l'instant du déclenchement de la deuxième phase d'accélération transitoire.

Avantageusement, lors de l'étape d'exécution de la phase d'accélération stabilisée, la consigne d'accélération est définie de façon cyclique de sorte que la consigne d'accélération soit la dernière mise à jour de l'accélération cible

$a_{ex}\blacklozenge$ effectuée pendant la phase d'accélération stabilisée, jusqu'à ce que la vitesse courante du véhicule hôte $V_0^h$ soit telle qu'en définissant les consignes d'accélération suivantes de sorte que la dérivée temporelle de la consigne d'accélération soit sensiblement égale à J3, jusqu'à ce que l'accélération du véhicule hôte soit nulle, la vitesse finale $V_f^h$ du véhicule hôte, c'est-à-dire la vitesse du véhicule hôte au moment où son accélération atteint une valeur nulle, soit sensiblement égale à la vitesse cible courante $V_f^t$.

A cet effet, l'étape 200 comprend avantageusement une étape 201 mise en oeuvre cycliquement consistant à vérifier si la vitesse courante du véhicule hôte respecte une condition de vitesse prédéterminée.

La vitesse $V_0^h$ à partir de laquelle la deuxième phase d'accélération transitoire est déclenchée est, par exemple, donnée par :

$$V_0^h \approx V_f^t - \Delta t * \left( a_{ex}^{\blacklozenge} - \frac{J_3 * \Delta t}{2} \right) * \left\lceil \frac{a_{ex}^{\blacklozenge}}{J_3 * \Delta t} \right\rceil + \frac{J_{3*} \Delta t^2}{2} * \left( \left\lceil \frac{a_{ex}^{\blacklozenge}}{J_3 * \Delta t} \right\rceil \right)^2 = b$$

Où $V_0^h \approx b$ signifie que $V_0^h = b$ ou que $\left| V_0^h - b \right| \leq sv$

Où $sv$ est un seuil de vitesse prédéterminé,

Où $\lceil x \rceil$ est la fonction partie entière supérieure de x (aussi appelée « ceil » en anglais) sur un nombre réel et $\approx$ signifie sensiblement égal. Cette méthode de calcul prend en compte le fait que la consigne d'accélération n'évolue pas de manière continue, mais qu'en étant définie, lors de la deuxième phase d'accélération transitoire, à intervalles de temps réguliers à partir de sa dérivée temporelle, elle suit « des marches. ».

En variante, on néglige ce phénomène. La vitesse du véhicule hôte $V_0^h$ à partir de laquelle la deuxième phase d'accélération transitoire est déclenchée est sensiblement égale à $VT$ où

$$VT = -\frac{a_{ex}^{\blacklozenge}}{2 * J_3}$$

La condition de vitesse peut alors être que la valeur absolue de $V_0^h - VT$ soit inférieure ou égale à un seuil prédéterminé.

Le procédé comprend ensuite une étape 300 d'exécution de la deuxième phase d'accélération transitoire PT2, consécutive à l'étape d'exécution de la phase d'accélération stabilisée, lors de laquelle on définit les consignes d'accélération de façon à suivre la première phase d'accélération transitoire, c'est-à-dire de façon à respecter la contrainte d'à-coup constant et égal à J3.

Pendant la deuxième phase d'accélération transitoire PT2, la consigne de l'accélération $A[k]$ est déterminée cycliquement jusqu'à ce que l'accélération courante du véhicule hôte $a_0$ soit nulle.

Le procédé comprend donc, par exemple, à chaque cycle de mise à jour k, une étape 301 d'incrémentation de la valeur $A[k]$ de la consigne d'accélération selon l'équation suivante :

$$A[k] = A[k-1] + \Delta t * J_3$$

Le procédé comprend également à chaque cycle de mise à jour, une étape 302 consistant à vérifier si la valeur absolue de l'accélération courante du véhicule hôte ou de la consigne d'accélération est inférieure ou égale à un seuil d'accélération prédéterminé sensiblement nul.

L'étape 300 se poursuit jusqu'à ce que la valeur absolue de l'accélération courante du véhicule soit inférieure ou égale au seuil d'accélération prédéterminé.

Le procédé selon l'invention permet donc de respecter la contrainte de vitesse finale. Il permet également de respecter la contrainte d'interdistance cible lorsque le comportement de la cible ne varie pas lors de l'étape d'exécution de la deuxième phase transitoire PT2. Dans les faits, l'interdistance finale est non loin de l'interdistance cible dès lors que le comportement de la cible ne varie pas de façon brusque lors de l'étape d'exécution de la deuxième phase d'accélération transitoire.

Il est à noter que le procédé selon l'invention présente l'avantage de pouvoir être mis en oeuvre en temps réel du fait de sa simplicité et, en particulier lorsque le profil est symétrique.

Lorsque la cible est un véhicule cible situé devant le véhicule hôte, le procédé comprend avantageusement une étape lors de laquelle on détermine les consignes d'accélération longitudinale de façon que le véhicule hôte présente constamment sensiblement la vitesse du véhicule cible et soit séparé du véhicule cible de l'interdistance cible. Il s'agit d'une fonction classique de régulateur de vitesse adaptatif.

L'invention se rapporte également à un produit programme d'ordinateur comprenant des instructions qui, lorsque le programme est exécuté par un ordinateur, conduisent celui-ci à mettre en oeuvre le procédé selon l'invention décrit précédemment.

Comme le montre la figure 4, le véhicule automobile hôte 20, ici considéré, comporte classiquement un châssis supportant un ensemble d'organes aptes à agir sur l'accélération longitudinale du véhicule hôte 20, dont un moteur 22 à combustion interne permettant de faire accélérer le véhicule, un embrayage et une boîte de vitesses 23, des moyens de freinage 24 permettant de faire décélérer le véhicule, et au moins un dispositif de commande 21 adapté à commander de façon autonome les organes précités et notamment à mettre en oeuvre le procédé qui sera décrit ci-après.

L'invention s'applique également aux véhicules à propulsion électrique ou hybride.

Le dispositif de commande 21 est configuré pour déterminer, lors de l'étape d'exécution du profil d'accélération, les consignes d'accélération à partir du profil d'accélération trapézoïdal. Pour cela il est connecté aux capteurs interne 40 et aux capteurs d'environnement 41 lui permettant de mesurer ou de calculer la vitesse longitudinale courante du véhicule hôte $V_0^h$ et l'accélération longitudinale courante $a_0$ du véhicule hôte, la vitesse courante d'une cible (ou vitesse cible à l'issue du profil), l'interdistance courante entre le véhicule hôte et la cible.

Le dispositif de commande 21 est avantageusement configuré pour commander les organes aptes à agir sur l'accélération du véhicule, à partir des consignes d'accélération, de sorte que le véhicule suive sensiblement le profil d'accélération.

Le dispositif de commande peut comprendre un ou plusieurs circuits électroniques dédiés ou un circuit à usage général. Chaque circuit électronique peut comprendre une machine de calcul reprogrammable (un processeur ou un microcontrôleur par exemple) et/ ou un calculateur exécutant un programme comprenant une séquence d'instructions et/ou une machine de calcul dédiée (par exemple un ensemble de portes logiques comme un FPGA, un DSP ou un ASIC, ou tout autre module matériel).

La solution proposée pourrait être implémentée avec des niveaux de délégation de conduite différents, comme par exemple, un système d'assistance partielle à la conduite dans lequel des consignes de commande seraient utilisée pour commander les organes aptes à agir sur l'accélération seulement dans certains contextes prédéterminés. En variante, la solution proposée pourrait être intégrée au sein d'un régulateur de vitesse adaptatif afin d'assurer la commande de la dynamique longitudinale du véhicule lors des phases transitoires. En variante, la solution proposée pourrait être intégrée au sein d'un dispositif de gestion de manoeuvres longitudinales au sein d'un système de conduite autonome.

## Revendications

1. Procédé de détermination de consignes d'accélération longitudinale lors d'une manoeuvre de changement de vitesse d'un véhicule automobile hôte (20) comprenant une étape d'exécution d'un profil d'accélération trapézoïdal (PT) lors de laquelle on détermine les consignes d'accélération longitudinale de sorte qu'elles suivent le profil d'accélération trapézoïdal (PT), le profil d'accélération trapézoïdal (PT) comprenant les trois phases consécutives suivantes :

   - une première phase d'accélération transitoire (TT1) lors de laquelle la dérivée temporelle de l'accélération longitudinale est une première dérivée prédéterminée (J1),
   - une phase d'accélération stabilisée (TS) lors de laquelle l'accélération longitudinale est une accélération dite cible, non nulle et constante pendant une durée dite stabilisée,
   - une deuxième phase d'accélération transitoire (TT2) lors de laquelle la dérivée temporelle de l'accélération longitudinale est une deuxième dérivée prédéterminée (J3), de signe opposé à celui de la première dérivée (J1), et se terminant à une accélération finale nulle,
   dans lequel, le profil d'accélération trapézoïdal est initialisé à un profil d'accélération trapézoïdal initial comprenant une accélération cible initiale prédéterminée et une durée stabilisée initiale prédéterminée,
   et dans lequel, lors de l'étape d'exécution du profil d'accélération trapézoïdal, on adapte le profil d'accélération trapézoïdal, en mettant à jour uniquement l'accélération cible et la durée stabilisée, en fonction d'un premier ensemble d'au moins un paramètre représentatif d'un comportement du véhicule hôte et d'un deuxième ensemble d'au moins un paramètre représentatif d'un comportement d'une cible.

2. Procédé de détermination de consignes d'accélération longitudinale selon la revendication précédente, comprenant une étape d'exécution de la première phase d'accélération transitoire (TT1) pendant laquelle on détermine cycliquement des premières consignes d'accélération longitudinale de sorte qu'elles suivent la première phase d'accélération transitoire (TT1) et pendant laquelle on met à jour cycliquement le profil d'accélération trapézoïdal en mettant à jour l'accélération cible en fonction d'une vitesse courante du véhicule hôte, d'une accélération longitudinale courante du véhicule hôte et d'une interdistance longitudinale courante entre le véhicule hôte et une cible.

3. Procédé de détermination de consignes selon la revendication précédente, dans lequel lors de l'étape d'exécution de la première phase d'accélération stabilisée, on met à jour cycliquement le profil d'accélération trapézoïdal en mettant à jour l'accélération cible de façon que lorsque l'accélération longitudinale du véhicule hôte poursuit le dernier profil d'accélération mis à jour, il présente à la fin de l'étape d'exécution du profil d'accélération trapézoïdal, une vitesse finale sensiblement égale à une vitesse cible courante et respecte une interdistance cible prédéterminée entre le véhicule hôte et la cible à la fin de l'étape d'exécution du profil d'accélération trapézoïdal.

4. Procédé de détermination de consignes d'accélération longitudinale selon l'une quelconque des revendications précédentes, comprenant une étape d'exécution de la phase d'accélération stabilisée (TS) pendant laquelle on détermine cycliquement des deuxièmes consignes d'accélération longitudinale de façon qu'elles suivent la phase d'accélération stabilisée et pendant laquelle on vérifie cycliquement si la vitesse courante du véhicule hôte est telle qu'en définissant les consignes d'accélération longitudinale suivantes de sorte à suivre la deuxième phase d'accélération transitoire, jusqu'à ce que l'accélération longitudinale du véhicule hôte soit sensiblement nulle, la vitesse finale du véhicule hôte est sensiblement égale à une vitesse cible courante.

5. Procédé de détermination de consignes d'accélération longitudinales selon l'une quelconque des revendications 3 à 4, dans lequel la vitesse cible courante est mesurée à partir d'un ensemble d'au moins un capteur d'environnement ou déterminée à partir d'au moins une mesure issue d'un ensemble d'au moins un capteur d'environnement.

6. Procédé de détermination de consignes d'accélération longitudinale selon l'une quelconque des revendications précédentes, dans lequel la valeur absolue de la première dérivée est égale à la valeur absolue de la deuxième dérivée.

7. Procédé de détermination de consignes d'accélération longitudinale selon l'une quelconque des revendications précédentes, dans laquelle la cible est un véhicule situé devant le véhicule hôte.

8. Produit programme d'ordinateur comprenant des instructions qui, lorsque le programme est exécuté par un ordinateur, conduisent celui-ci à mettre en oeuvre le procédé selon l'une quelconque des revendications précédentes.

9. Dispositif de commande d'un véhicule hôte configuré pour déterminer des consignes d'accélération longitudinale lors d'une manoeuvre de changement de vitesse d'un véhicule automobile hôte (20), le véhicule étant configuré pour exécuter un profil d'accélération trapézoïdal (PT) lors duquel les consignes d'accélération longitudinale sont déterminées de sorte qu'elles suivent un profil d'accélération trapézoïdal comprenant les trois phases consécutives suivantes :

- une première phase d'accélération transitoire (TT1) lors de laquelle la dérivée temporelle de l'accélération longitudinale est une première dérivée prédéterminée (J1),
- une phase d'accélération stabilisée (TS) lors de laquelle l'accélération longitudinale est une accélération dite cible, non nulle et constante pendant une durée dite stabilisée,
- une deuxième phase d'accélération transitoire (TT2) lors de laquelle la dérivée temporelle de l'accélération longitudinale est une deuxième dérivée prédéterminée (J3), de signe opposé à celui de la première dérivée (J1), et se terminant à une accélération finale nulle,

le dispositif de commande étant configuré pour adapter, lors de l'étape d'exécution du profil d'accélération trapézoïdal, le profil d'accélération trapézoïdal, en mettant à jour uniquement l'accélération cible et de la durée stabilisée, en fonction d'un premier ensemble d'au moins un paramètre représentatif d'un comportement du véhicule hôte et d'un deuxième ensemble d'au moins un paramètre représentatif d'un comportement d'une cible.

**Patentansprüche**

1. Verfahren zum Bestimmen von Längsbeschleunigungsvorgaben bei einem Geschwindigkeitsänderungsmanöver eines Host-Kraftfahrzeugs (20), umfassend einen Schritt zum Ausführen eines trapezförmigen Beschleunigungsprofils (PT), bei dem die Längsbeschleunigungsvorgaben derart bestimmt werden, dass sie dem trapezförmigen Beschleunigungsprofil (PT) folgen, wobei das trapezförmige Beschleunigungsprofil (PT) die folgenden drei aufeinanderfolgenden Phasen umfasst:

   - eine erste vorübergehende Beschleunigungsphase (TT1), bei der die Zeitableitung der Längsbeschleunigung eine erste vorbestimmte Ableitung (11) ist,
   - eine stabilisierte Beschleunigungsphase (TS), bei der die Längsbeschleunigung eine als Ziel bezeichnete Beschleunigung ist, die während einer als stabilisiert bezeichneten Dauer nicht Null und konstant ist,
   - eine zweite vorübergehende Beschleunigungsphase (TT2), bei der die Zeitableitung der Längsbeschleunigung eine zweite vorbestimmte Ableitung (J3) mit einem Vorzeichen ist, das zu dem der ersten Ableitung (11) entgegengesetzt ist, und die mit einer abschließenden Beschleunigung gleich Null endet,
   wobei das trapezförmige Beschleunigungsprofil auf ein anfängliches trapezförmiges Beschleunigungsprofil initialisiert wird, das eine anfängliche vorbestimmte Zielbeschleunigung und eine anfängliche vorbestimmte stabilisierte Dauer umfasst,
   und wobei bei dem Schritt zum Ausführen des trapezförmigen Beschleunigungsprofils das trapezförmige Beschleunigungsprofil angepasst wird, indem nur die Zielbeschleunigung und die stabilisierte Dauer aktualisiert werden, in Abhängigkeit von einem ersten Satz von mindestens einem Parameter, der für ein Verhalten des Host-Fahrzeugs steht, und einem zweiten Satz von mindestens einem Parameter, der für ein Verhalten eines Ziels steht.

2. Verfahren zum Bestimmen von Längsbeschleunigungsvorgaben nach dem vorhergehenden Anspruch, umfassend einen Schritt zum Ausführen der ersten vorübergehenden Beschleunigungsphase (TT1), während der erste Längsbeschleunigungsvorgaben zyklisch bestimmt werden, so dass sie der ersten vorübergehenden Beschleunigungsphase (TT1) folgen, und während der das trapezförmige Beschleunigungsprofil zyklisch aktualisiert wird, indem die Zielbeschleunigung in Abhängigkeit von einer aktuellen Geschwindigkeit des Host-Fahrzeugs, von einer aktuellen Längsbeschleunigung des Host-Fahrzeugs und von einem aktuellen Längsabstand zwischen dem Host-Fahrzeug und einem Ziel aktualisiert wird.

3. Verfahren zum Bestimmen von Vorgaben nach dem vorhergehenden Anspruch, wobei beim Schritt zum Ausführen der ersten stabilisierten Beschleunigungsphase das trapezförmige Beschleunigungsprofil zyklisch aktualisiert wird, indem die Zielbeschleunigung derart aktualisiert wird, dass, wenn die Längsbeschleunigung des Host-Fahrzeugs dem letzten aktualisierten Beschleunigungsprofil folgt, es am Ende des Schritts zum Ausführen des trapezförmigen Beschleunigungsprofils eine Endgeschwindigkeit aufweist, die im Wesentlichen gleich einer aktuellen Zielgeschwindigkeit ist, und am Ende des Schritts zum Ausführen des trapezförmigen Beschleunigungsprofils einen vorbestimmten Zielabstand zwischen dem Host-Fahrzeug und dem Ziel einhält.

4. Verfahren zum Bestimmen von Längsbeschleunigungsvorgaben nach einem der vorhergehenden Ansprüche, umfassend einen Schritt zum Ausführen der stabilisierten Beschleunigungsphase (TS), während der zweite Längsbeschleunigungsvorgaben zyklisch bestimmt werden, so dass sie der stabilisierten Beschleunigungsphase folgen, und während der zyklisch überprüft wird, ob die aktuelle Geschwindigkeit des Host-Fahrzeugs derart ist, dass, durch Definieren der folgenden Längsbeschleunigungsvorgaben, so dass sie der zweiten vorübergehenden Beschleunigungsphase folgen, bis die Längsbeschleunigung des Host-Fahrzeugs im Wesentlichen Null ist, die Endgeschwindigkeit des Host-Fahrzeugs im Wesentlichen gleich einer aktuellen Zielgeschwindigkeit ist.

5. Verfahren zum Bestimmen von Längsbeschleunigungsvorgaben nach einem der Ansprüche 3 bis 4, wobei die aktuelle Zielgeschwindigkeit anhand eines Satzes von mindestens einem Umgebungssensor gemessen oder anhand von mindestens einer Messung aus einem Satz von mindestens einem Umgebungssensor bestimmt wird.

6. Verfahren zum Bestimmen von Längsbeschleunigungsvorgaben nach einem der vorhergehenden Ansprüche, wobei der Absolutwert der ersten Ableitung gleich dem Absolutwert der zweiten Ableitung ist.

7. Verfahren zum Bestimmen von Längsbeschleunigungsvorgaben nach einem der vorhergehenden Ansprüche, wobei das Ziel ein sich vor dem Host-Fahrzeug befindendes Fahrzeug ist.

8. Computerprogrammprodukt, umfassend Befehle, die bei Ausführen des Programms durch einen Computer diesen dazu veranlassen, das Verfahren nach einem der vorhergehenden Ansprüche durchzuführen.

9. Vorrichtung zum Steuern eines Host-Fahrzeugs, das dafür konfiguriert ist, Längsbeschleunigungsvorgaben bei einem Geschwindigkeitsänderungsmanöver eines Host-Kraftfahrzeugs (20) zu bestimmen, wobei das Fahrzeug dafür konfiguriert ist, ein trapezförmiges Beschleunigungsprofil (PT) auszuführen, bei dem die Längsbeschleunigungsvorgaben derart bestimmt werden, dass sie einem trapezförmigen Beschleunigungsprofil folgen, umfassend die drei folgenden aufeinanderfolgenden Phasen:

- eine erste vorübergehende Beschleunigungsphase (TT1), bei der die Zeitableitung der Längsbeschleunigung eine erste vorbestimmte Ableitung (11) ist,
- eine stabilisierte Beschleunigungsphase (TS), bei der die Längsbeschleunigung eine als Ziel bezeichnete Beschleunigung ist, die während einer als stabilisiert bezeichneten Dauer nicht Null und konstant ist,
- eine zweite vorübergehende Beschleunigungsphase (TT2), bei der die Zeitableitung der Längsbeschleunigung eine zweite vorbestimmte Ableitung (J3) mit einem Vorzeichen ist, das zu dem der ersten Ableitung (11) entgegengesetzt ist, und die mit einer abschließenden Beschleunigung gleich Null endet,

wobei die Steuervorrichtung dafür konfiguriert ist, bei dem Schritt zum Ausführen des trapezförmigen Beschleunigungsprofils das trapezförmige Beschleunigungsprofil anzupassen, indem nur die Zielbeschleunigung und die stabilisierte Dauer aktualisiert werden, in Abhängigkeit von einem ersten Satz von mindestens einem Parameter, der für ein Verhalten des Host-Fahrzeugs steht, und einem zweiten Satz von mindestens einem Parameter, der für ein Verhalten eines Ziels steht.

## Claims

1. A method for determining longitudinal acceleration setpoints during a gear change manoeuver of a host automotive vehicle (20) comprising a step of executing a trapezoidal acceleration profile (PT), during which step the longitudinal acceleration setpoints are determined such that they follow the trapezoidal acceleration profile (PT), with the trapezoidal acceleration profile (PT) comprising the following three consecutive phases:

- a first transient acceleration phase (TT1), during which the time derivative of the longitudinal acceleration is a first predetermined derivative (J1),
- a stabilised acceleration phase (TS), during which the longitudinal acceleration is a so-called target acceleration, that is non-zero and is constant for a so-called stabilised duration,
- a second transient acceleration phase (TT2), during which the time derivative of the longitudinal acceleration is a second predetermined derivative (J3), of opposite sign to that of the first derivative (J1), and ending at a zero final acceleration,
wherein the trapezoidal acceleration profile is initialised at an initial trapezoidal acceleration profile comprising a predetermined initial target acceleration and a predetermined initial stabilised duration,
and wherein, during the step of executing the trapezoidal acceleration profile, the trapezoidal acceleration profile is adapted by updating only the target acceleration and the stabilised duration, as a function of a first set of at least one parameter representing a behaviour of the host vehicle and a second set of at least one parameter representing a behaviour of a target.

2. The method for determining longitudinal acceleration setpoints according to the preceding claim, comprising a step of executing the first transient acceleration phase (TT1), during which first longitudinal acceleration setpoints are cyclically determined so that they follow the first transient acceleration phase (TT1) and during which step the trapezoidal acceleration profile is cyclically updated by updating the target acceleration as a function of a current speed of the host vehicle, a current longitudinal acceleration of the host vehicle, and a current longitudinal spacing between the host vehicle and a target.

3. The method for determining setpoints according to the preceding claim, wherein, during the step of executing the first stabilised acceleration phase, the trapezoidal acceleration profile is cyclically updated by updating the target acceleration such that, when the longitudinal acceleration of the host vehicle follows the last updated acceleration profile, at the end of the step of executing the trapezoidal acceleration profile it has a final speed that is substantially equal to a current target speed and complies with a predetermined target spacing between the host vehicle and the target at the end of the step of executing the trapezoidal acceleration profile.

4. The method for determining longitudinal acceleration setpoints according to any one of the preceding claims, comprising a step of executing the stabilised acceleration phase (TS), during which step second longitudinal acceleration setpoints are cyclically determined so that they follow the stabilised acceleration phase and during which step the current speed of the host vehicle is cyclically checked as to whether it is of such a sort that, by defining the following longitudinal acceleration setpoints so as to follow the second transient acceleration phase, until the longitudinal acceleration of the host vehicle is substantially zero, the final speed of the host vehicle is substantially equal to a current target speed.

5. The method for determining longitudinal acceleration setpoints according to any one of claims 3 to 4, wherein the current target speed is measured based on a set of at least one environment sensor or is determined based on at least one measurement from a set of at least one environment sensor.

6. The method for determining longitudinal acceleration setpoints according to any one of the preceding claims, wherein the absolute value of the first derivative is equal to the absolute value of the second derivative.

7. The method for determining longitudinal acceleration setpoints according to any one of the preceding claims, wherein the target is a vehicle located in front of the host vehicle.

8. A computer program product comprising instructions which, when the program is executed by a computer, cause it to implement the method according to any one of the preceding claims.

9. A control device of a host vehicle configured to determine longitudinal acceleration setpoints during a gear change manoeuver of a host automotive vehicle (20), with the vehicle being configured to execute a trapezoidal acceleration profile (PT), during which the longitudinal acceleration setpoints are determined such that they follow a trapezoidal acceleration profile comprising the following three consecutive phases:

- a first transient acceleration phase (TT1), during which the time derivative of the longitudinal acceleration is a first predetermined derivative (J1),
- a stabilised acceleration phase (TS), during which the longitudinal acceleration is a so-called target acceleration, that is non-zero and constant for a so-called stabilised duration;
- a second transient acceleration phase (TT2), during which the time derivative of the longitudinal acceleration is a second predetermined derivative (J3), of opposite sign to that of the first derivative (J1), and ending at a zero final acceleration,

with the control device being configured to adapt, during the step of executing the trapezoidal acceleration profile, the trapezoidal acceleration profile by updating only the target acceleration and the stabilised duration, as a function of a first set of at least one parameter representing a behaviour of the host vehicle and a second set of at least one parameter representing a behaviour of a target.

Figure 1

Figure 2

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012277965 A

- US 20150224992 A1

**Littérature non-brevet citée dans la description**

- **BELLEM, HANNA ; SCHÖNENBERG, THORBEN ; KREMS, JOSEF F et al.** Objective metrics of comfort: developing a driving style for highly automated vehicles. *Transportation research part F: traffic psychology and behaviour,* 2016, vol. 41, 45-54
- **BELLEM, HANNA ; THIEL, BARBARA ; SCHRAUF, MICHAEL et al.** Comfort in automated driving: An analysis of préférences for different automated driving styles and their dependence on personality traits. *Transportation research part F: traffic psychology and behaviour,* 2018, vol. 55, 90-100

- **MÜLLER, THOMAS ; HAJEK, HERMANN ; RADIC-WEIßENFELD ; LJUBICA, 1 et al.** Can you feel the différence? the just noticeable différence of longitudinal accélération. *Proceedings of the Human Factors and Ergonomies Society Annual Meeting.,* 2013, 1219-1223
- **BELLEM, HANNA ; THIEL, BARBARA ; SCHRAUF, MICHAEL et al.** Comfort in automated driving: "An analysis of preferences for different automated driving styles and their dependence on personality traits. *Transportation research part F: traffic psychology and behaviour,* 2018, vol. 55, 90-100